# EUROPÄISCHE PATENTANMELDUNG

(11) **EP 1 130 327 A2**
(43) Veröffentlichungstag der Anmeldung: **05.09.2001**
(21) Anmeldenummer: 00126267.4
(22) Anmeldetag: 01.12.2000
(51) Int. Cl.: F24D 12/02

(54) **Anordnung zur Restwärmenutzung in einer Heizungsanlage**

(30) Priorität: 15.02.2000 DE 10006723
(71) Anmelder: Man B&W Diesel Aktiengesellschaft, 86153 Augsburg (DE)
(72) Erfinder: Kandler, Andreas, 21502 Geesthacht (DE); Schulz, Dirk, 21629 Neu Wulmsdorf (DE)
(74) Vertreter: Schober, Stefan, Dipl.-Ing.

(57) **Zusammenfassung**

Die Erfindung betrifft eine Anordnung zur genau einstellbaren Restwärmenutzung in einer Heizungsanlage, in deren Kesselkreis (2) ein Wärmetauscher (6) im Vorlauf angeordnet ist und eine Regeleinheit (7) zur gezielten Einstellung der Kesselvorlauftemperatur (T_{KVL}) vorgesehen ist.

## Beschreibung

Die Erfindung betrifft eine Anordnung zur Restwärmenutzung in einer Heizungsanlage gemäß dem Oberbegriff des Patentanspruchs 1.

Heizkessel für den Brennwertbetrieb sind allgemein bekannt. Bei dieser Technik wird dem Rauchgas soviel Wärme entzogen, daß der enthaltene Wasserdampf kondensiert und auch die Kondensationswärme genutzt wird. Da sich jedoch der im Abgas enthaltene Schwefel im Wasser zu Schwefelsäure löst, müssen die für den Brennwertbetrieb benutzten Wärmetauscher aus hochwertigen korrosionsfesten und somit teuren Werkstoffen hergestellt werden. Außerdem muß die Flüssigkeit vor dem Einleiten in das öffentliche Abwassernetz in speziellen Einrichtungen neutralisiert werden.

Hiervon ausgehend ist es die Aufgabe der Erfindung eine Anordnung zur Restwärmenutzung in einer Heizungsanlage bereitzustellen, die die Restwärme in einem genau einstellbaren Maße zurückgewinnt.
Diese Aufgabe wird erfindungsgemäß durch die kennzeichnenden Merkmale des Patentanspruchs 1 gelöst.

Durch die erfindungsgemäße Anordnung ist es in vorteilhafter Weise möglich die Kondensation des im Rauchgas enthaltenen Wasserdampfs zu verhindern, wodurch die Wärmetauscher aus kostengünstigen Werkstoffen hergestellt werden können und keine sauren Flüssigkeiten aufzubereiten sind.
Aufgrund der vorteilhaften Konstruktion des erfindungsgemäßen Abgaswärmetauschers wird bei unbeabsichtigtem Brennwertbetrieb der Anlage die Durchströmung des Rauchgases durch das Kondensat behindert, wodurch am Brenner ein Abgasgegendruck entsteht. Der Brenner geht daraufhin auf Störung und die Anlage wird automatisch abgeschaltet. Bei der zwangsläufigen Überprüfung der Anlage wird der Brennwertbetrieb aufgrund der - im Wärmetauscher angesammelten - Flüssigkeit erkannt und vor Wiederinbetriebnahme müssen die Ursachen beseitigt werden, so daß die Zerstörung des Wärmetauschers durch saures Kondensat wirksam verhindert wird.

Nachfolgend wird die Erfindung anhand der beigefügten schematischen Zeichnungen näher erläutert. Dabei zeigen die
- Fig. 1: ein Blockschaltbild einer erfindungsgemäß ausgeführten Anordnung,
- Fig. 2: eine Prinzipskizze eines erfindungsgemäß aufgebauten Wärmetauschers und
- Fig. 3: einen Längsschnitt eines Wellrohrs.

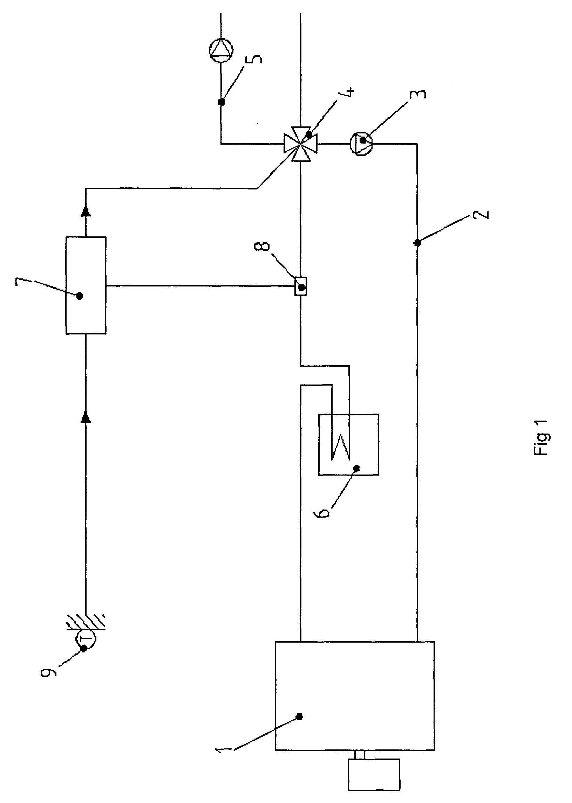

Das in Fig. 1 gezeigte Blockschaltbild zeigt eine erfindungsgemäße Anordnung eines witterungsgeführten Kessels (1), der mit einem nicht näher bezifferten Brenner betrieben wird. Dem Kessel (1) ist ein Kesselkreis (2) zugeordnet in dessen Vorlauf ein Wärmetauscher (6) eingebaut ist. Der Wärmetauscher (6) ist außerhalb des Kessels (1) angeordnet und wird auch als externer bzw. nachgeschalteter Wärmetauscher (6) bezeichnet. Durch den Wärmetauscher (6) werden die heißen Rauchgase aus der im Kessel (1) stattfindenden Verbrennung geführt, wobei sie das Vorlaufwasser des Kesselkreises (2) erwärmen.
In der Nähe des Wasseraustritts aus dem Wärmetauscher (6) ist ein Meßfühler (8) zur Aufnahme der Wassertemperatur des Vorlaufs T_{VL} angeordnet. Der Kesselkreis (2) ist über einen Mischer (4) mit einem in der Zeichnung nur angedeuteten Heizkreis (5)-gekoppelt. Im Rücklaufzweig des Kesselkreises (2) kann eine Umwälzpumpe (3) vorgesehen werden.
Der Mischer (4) läßt sich durch eine Regeleinheit (7) ansteuern, wodurch der Volumenstrom des kühleren Rücklaufwassers zur Temperaturregelung den verschiedenen Kreisen zugemischt werden kann.

Über die durch einen Außenfühler (9) zugeführte Außentemperatur ermittelt die Regeleinheit (7) anhand einer abgespeicherten Kurve die einzuregelnde Vorlauftemperatur des Heizkreises (5) und stellt den Mischer (4) entsprechend ein.
Für die Vorlauftemperatur T_{KVL} des Kesselkreises (2) läßt sich an der Regeleinheil (7) ein Temperatursollwert T_{Soll} einstellen, die mit der tatsächlichen Kesselvorlauftemperatur T_{KVL} verglichen wird, woraus sich ein Stellwert ergibt und der Mischer (4) angesteuert wird, um dem Rücklauf des Kesselkreises (2) zur Einstellung des Temperatursollwerts T_{Soll} die entsprechende Menge Rücklaufwasser des Heizkreises (5) zuzumischen.
Durch die Einstellung eines frei wählbaren Temperatursollwerts T_{Soll} läßt sich die aus den Rauchgasen genutzte Wärme genau festlegen. Je nach Brennstoffart läßt sich somit die im Wärmetauscher (6) auftretende niedrigste Temperatur T_{VL} so einstellen, daß beispielsweise die Kondensation des im Rauchgas enthaltenen Wassers verhindert wird. Dadurch entstehen im Wärmetauscher (6) keine sauren Flüssigkeiten, so daß Werkstoffe mit geringeren Anforderungen bezüglich der Korrosionsfestigkeit eingesetzt werden können. Weiterhin entfällt die Neutralisation bzw. Entsorgung von sauren Flüssigkeiten.
Bei Verwendung eines Ölbrenners beispielsweise wird zur Vermeidung von Kondensation eine Kesselvorlauftemperatur T_{KVL} von etwa 50° Celsius eingeregelt.

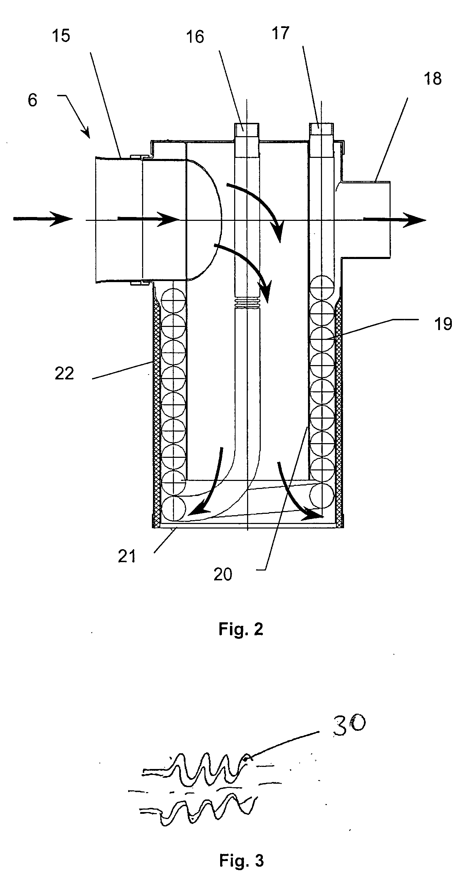

Die Fig. 2 zeigt den prinzipiellen Aufbau eines erfindungsgemäßen Wärmetauschers (6) in einem Längsschnitt.
Der Wärmetauscher (6) besteht aus einem vorzugsweise zylindrischen Gehäuse (22), das beispielsweise als geschweißte Blechkonstruktion ausgeführt ist.
Die Hauptachse dieses Gehäuses (22) steht senkrecht und im oberen Bereich befindet sich ein Abgaseintritt (15), der mit einem Rohr durch die Wand des Gehäuses (22) geführt wird und in ein Fallrohr (20) mündet. Das Fallrohr (20) verläuft konzentrisch zum Gehäuse (22) mit einem radialen Abstand zur Innenwand und ist im oberen Bereich gasdicht gegen das Gehäuse (22) abgeschlossen.

Die eintretenden Abgase werden im Fallrohr (20) nach unten geführt, wo sie an dessen unterem Ende austreten, zwischen Fallrohr (20) und Gehäuse (22) an einem wendelförmig angeordneten Rohr (19) vorbei nach oben strömen und durch einen als Stutzen ausgeführten Abgasaustritt (18) aus dem Gehäuse (22) austreten. Das Fallrohr (20) endet im unteren Bereich mit Abstand zu einem Deckel (21), der das Gehäuse (22) nach außen hin abschließt. Dieser Deckel (21) kann für Wartungsarbeiten, wie beispielsweise Reinigungsarbeiten abgenommen werden. Das Rohr (19) wird wasserseitig durch die obere Abdeckung des Gehäuses (22) durchgeführt und wendelförmig um das Fallrohr (20) herum nach unten geführt, wobei es innen am Fallrohr (20) und außen an der Wand des Gehäuses (22) anliegt.
Um die Wärmeaustauschfläche zu vergrößern, wird das wasserseitige Rohr (19) vorzugsweise als Wellrohr (30: Fig. 3) ausgeführt. Dieses Wellrohr (30) liegt sowohl am Fallrohr (20) als auch an der Wand des Gehäuses (22) mit seinen Wellenbergen an und die heißen Abgase strömen durch die Wellentäler an den verschiedenen Windungen des Rohres (19) vorbei nach oben.
Zwischen dem unteren Ende des Fallrohrs (20) und dem Deckel (21) wird das Rohr (19) radial nach innen gebogen und im Zentrum des Fallrohrs (20) senkrecht nach oben geführt, wo es durch die Abdeckung austritt.
Das von den Rauchgasen zu erwärmende Wasser kann durch den in Umfangsnähe angebrachten Wasserzulauf (17) einströmen und im Rohr (19) wendelförmig nach unten fließen, von wo es in der Mitte des Fallrohrs (20) wieder nach oben geleitet werden und durch den Wasserablauf (16) aus dem Gehäuse (22) austreten kann. Es ist jedoch auch möglich das Wasser in umgekehrter Richtung durch den Wärmetauscher (6) zu führen, also vom Wasserablauf (16) aus nach unten fließen zu lassen und im wendelförmig angeordneten Rohr (19) nach oben zu führen und durch den Wasserzulauf (17) austreten zu lassen.

In Fig. 3 ist ein Längsschnitt durch ein Wellrohr (30) dargestellt. Ein dünnwandiges glattes Rohr mit etwa 0,3 mm Wanddicke wird in Längsrichtung gestaucht, so daß die gezeigte Form der Mantelfläche mit Wellenbergen und -tälern entsteht.

Durch die erfindungsgemäße wendelförmige Führung des Wasserrohrs (19) und die Verwendung eines Wellrohres (30) kann ein besonders vorteilhafter kompakter Wärmetauscher (6) mit großer Austauschfläche bereitgestellt werden, der raumsparend in eine bereits bestehende Heizungsanlage integriert bzw. nachgerüstet werden kann.
Die Verwendung von preiswertem Wellrohr (30) und die optimale Anordnung des Rohres (19) wirken sich kostengünstig auf den Wärmetauscher (6) aus.
Die durch einfache Handgriffe zu öffnenden Deckel (21) unten und oben wirken sich besonders vorteilhaft bezüglich der Servicefreundlichkeit des Wärmetauschers (6) aus. Dadurch läßt sich der Zustand im Inneren des Wärmetauschers (6) einfach begutachten und ggf. reinigen.
Die Wellrohr-Wendel läßt sich auch unkompliziert aus dem Gehäuse (22) entnehmen, wodurch eine einfache und effiziente Reinigung durchgeführt werden kann oder ein schneller Ersatz von zerstörten Wendeln möglich ist.

Durch die besonders vorteilhafte Anordnung des Fallrohres (20) wird bei Auftreten von Kondensation - beispielsweise aufgrund einer Fehlfunktion - der Überströmquerschnitt an dessen unterem offenen Ende durch den ansteigenden Flüssigkeitsspiegel verkleinert bzw. verschlossen, so daß in der Abgasleitung ein Gegendruck entsteht. Aufgrund dieses Gegendrucks schaltet der Brenner automatisch auf Störung und zur Wiederinbetriebnahme der Heizungsanlage wird das Wartungspersonal zwangsläufig auf den Brennwertbetrieb aufmerksam und kann die Ursachen dafür beseitigen. Dadurch wird auf besonders einfache Weise verhindert, daß die Fehlfunktion unbemerkt bleibt und der Wärmetauscher durch das aggressive Kondensat zerstört wird.

Bei Einstellung eines Temperatursollwertes T_{Soll} unterhalb des Taupunkts der Rauchgase muß der Wärmetauscher (6) aus einem korrosionsbeständigen Werkstoff hergestellt werden und am Deckel (21) muß ein Ablauf für das entstehende Kondensat vorgesehen werden. Das Kondensat kann in einer zusätzlichen Vorrichtung neutralisiert oder in einem Behälter gesammelt und entsprechend entsorgt werden.

Eine vorteilhafte Ausführung sieht ein weiteres Gehäuse vor, welches den Wärmetauscher (6) vollständig oder teilweise umgibt und zur Wärmeisolation dient. Statt einem zusätzlichen Gehäuse kann auch auf das eigentliche Gehäuse (22) des Wärmetauschers (6) eine isolierende Schicht aufgebracht werden.

### Bezugszeichenliste

- 1: Kessel
- 2: Kesselkreis
- 3: Umwälzpumpe
- 4: Mischer
- 5: Heizkreis
- 6: Wärmetauscher
- 7: Regeleinheit
- 8: Meßfühler
- 9: Außenfühler
- T_{Soll}: Temperatursollwert
- T_{KVL}: Kesselvorlauftemperatur
- 15: Abgaseintritt
- 16: Wasserablauf
- 17: Wasserzulauf
- 18: Abgasaustritt
- 19: Rohr
- 20: Fallrohr
- 21: Deckel
- 22: Gehäuse
- 30: Wellrohr

## Patentansprüche

1. Heizungsanlage, mit einem Kessel (1), dem ein Kesselkreis (2) zugeordnet ist, einem Wärmetauscher (6) zur Restwärmenutzung, einer Umwälzpumpe (3) sowie einem Mischer (4) und einem Heizkreis (5), **dadurch gekennzeichnet**, daß der Wärmetauscher (6) im Vorlauf des Kesselkreises (2) angeordnet ist und eine Regeleinheit (7) zur gezielten Beeinflussung der Vorlauftemperatur (T_{KVL}) des Kesselkreises, vorgesehen ist.

2. Heizungsanlage nach Anspruch 1, **dadurch gekennzeichnet**, daß die Regeleinheit (7) die Kesselvorlauftemperatur (T_{KVL}) oberhalb des Taupunkts der Rauchgase einstellt, so daß auf der Abgasseite des Wärmetauschers (6) Kondensation verhindert wird.

3. Heizungsanlage nach Anspruch 2, **dadurch gekennzeichnet**, daß die Kesselvorlauftemperatur (T_{KVL}) auf etwa 50° Celsius eingeregelt wird.

4. Heizungsanlage nach Anspruch 1, **dadurch gekennzeichnet**, daß der Wärmetauscher (6) aus einem, konzentrisch zum Gehäuse (22) angeordneten, Fallrohr (20) besteht, das abgasseitig nach unten führt und am unteren Ende offen ist, und einem wasserseitigen, als Wellrohr (30) ausgeführten, Rohr (19), das wendelförmig um das Fallrohr (20) geführt ist und an der Außenseite des Gehäuses (22) ein Wasserzulauf sowie -ablauf vorgesehen ist, wobei die Windungen des Rohres (19) innen am Fallrohr (20) und außen am Gehäuse (22) anliegen und die Abgase durch die Wellentäler des Wellrohres (30) an den Windungen des Rohres (19) vorbei nach oben strömen.

5. Heizungsanlage nach Anspruch 1, **dadurch gekennzeichnet**, daß die Durchströmung des Abgases im Wärmetauscher (6) mittels eines Flüssigkeitsspiegels sperrbar ist.

6. Heizungsanlage nach Anspruch 1, **dadurch gekennzeichnet**, daß für den Wärmetauscher (6) ein zusätzliches Gehäuse vorgesehen ist, welches den Wärmetauscher (6) vollständig oder teilweise umgibt.

7. Verfahren zur Restwärmenutzung in einer Heizungsanlage nach Anspruch 1, **dadurch gekennzeichnet**, daß die Vorlauftemperatur (T_{KVL}) des Kesselkreises (2) auf etwa 50° Celsius eingeregelt wird.
